# FASCICULE DE BREVET EUROPEEN

(11) **EP 2 168 867 B1**
(45) Date de publication et mention de la délivrance du brevet: **13.06.2012**
(21) Numéro de dépôt: 09290711.2
(22) Date de dépôt: 18.09.2009
(51) Int. Cl.: F16H 25/24, B64C 13/28, B64C 25/24, B64C 13/50

(54) **Actionneur télescopique à tige principale et à tige auxiliaire**
Teleskopischer Stellantrieb mit Haupt- und Hilfstriebstange
Telescopic actuator with a main rod and an auxiliary rod

(30) Priorité: 25.09.2008 FR 0805272
(43) Date de publication de la demande: 31.03.2010
(73) Titulaire: Messier-Bugatti-Dowty, 78140 Velizy Villacoublay (FR)
(72) Inventeur: Charuel, Hervé, 91620 Nozay (FR); Bucheton, Daniel, 78150 Le Chesnay (FR); Nierlich, Florent, 92250 Lagarenne-Colombes (FR)
(74) Mandataire: Parzy, Benjamin Alain

(56) Documents cités:
- FR-A- 951 949
- FR-A- 2 895 483

## Description

L'invention a trait à un actionneur télescopique à tige principale et tige auxiliaire. Plus précisément l'invention concerne le contrôle de la sortie et de la progression de la tige auxiliaire hors du corps de l'actionneur.

### ARRIERE PLAN DE L'INVENTION

On connaît un actionneur télescopique comportant deux tiges principale et auxiliaire, cet actionneur comprenant essentiellement un corps, des moyens de coulissement entre d'une part le corps et la tige principale et d'autre part entre la tige principale et la tige auxiliaire permettant le coulissement des tiges entre des positions de rentrée et de sortie.

L'actionneur comprend également des moyens de retenue permettant le blocage ou la libération de la tige auxiliaire dans la tige principale et des moyens de freinage de ladite tige auxiliaire permettant de freiner la tige auxiliaire lors de son extension. Un exemple de ce type de réalisation est notamment décrit dans le document FR 2 895 483A1.

Ce type d'actionneur est particulièrement intéressant puisqu'il permet, en cas de blocage de la tige principale, de poursuivre l'allongement de l'actionneur en commandant la libération de la tige auxiliaire par les moyens de retenue, débloquant ainsi le mouvement de la chaîne mécanique dans laquelle il est inséré.

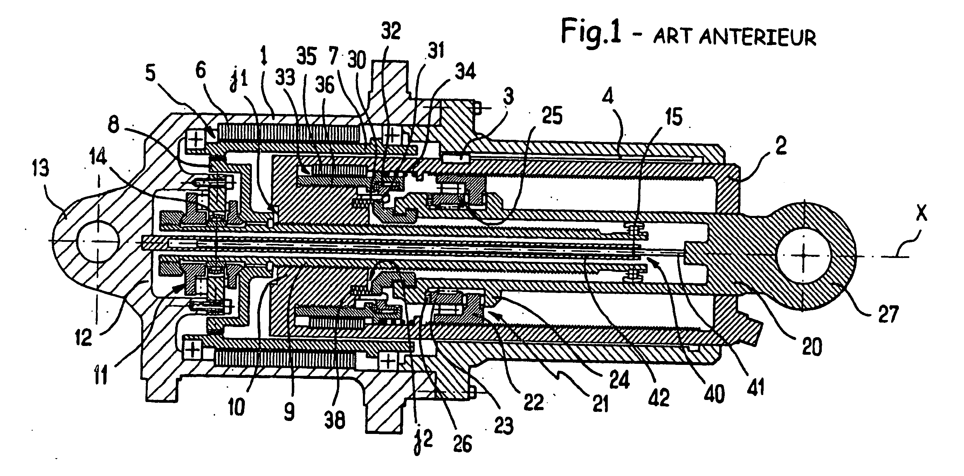

En se reportant à la figure 1 qui représente en coupe schématique un actionneur de l'état de la technique illustré dans le document précité, on voit que ce dernier comporte un corps 1 définissant une cavité cylindrique fermée par un fond 12 qui porte une chape 13. Une tige principale 2 est montée dans la cavité du corps 1 pour coulisser selon un axe de coulissement X et saillir plus ou moins du corps 1 par une extrémité ouverte de la cavité formant palier.

La tige principale 2 est creuse et définit une cavité dans laquelle une tige auxiliaire 20 est montée pour coulisser dans la tige principale 2 selon l'axe X et saillir d'une extrémité ouverte de celle-ci formant palier.

L'actionneur comporte des moyens commandés de retenue de la tige auxiliaire 20 en position de rentrée dans la tige principale 2. Ces moyens de retenue comportent ici :
- une griffe 30 s'étendant intérieurement à la tige principale 2 ;
- un redan 31 monté en extrémité de la tige auxiliaire 20 et adapté à coopérer avec la griffe 30 ;
- un manchon de verrouillage 32 déplaçable axialement par un moteur de déverrouillage 33 à l'encontre d'un ressort de rappel 34 entre une position de verrouillage (illustrée ici) dans laquelle il coiffe la griffe 30 pour l'empêcher de s'expanser radialement, et une position de libération dans laquelle il laisse la griffe 30 libre de s'expanser radialement au passage du redan 31. A cet effet, le moteur de déverrouillage 33 comporte un stator 35 fixé sur la tige principale 2 et un rotor 36 qui coopère avec un filetage homologue de la tige principale 2 pour constituer une liaison hélicoïdale réversible. La rotation du rotor 36 provoque donc son déplacement axial. Le manchon de verrouillage 32 est porté en extrémité du rotor 36 en étant monté à rotation sur ce dernier au moyen de rouleaux.

L'actionneur comporte en outre des moyens de freinage d'un coulissement de la tige auxiliaire 20 dans la tige principale 2 dans le sens d'une extension de la tige auxiliaire 20. Ces moyens de freinage, qui forment également un palier 21 de guidage de la tige auxiliaire 20 dans la tige principale 2, comprennent :
- un entraîneur 22 qui est fileté extérieurement et qui coopère avec un taraudage intérieur de la tige principale 2 pour constituer entre l'entraîneur 22 et la tige principale 2 une liaison hélicoïdale réversible ;
- une virole 23 qui est montée en rotation sur la tige auxiliaire 20 au moyen de rouleaux, l'entraîneur 22 étant lui-même monté en rotation sur la virole 23 au moyen de rouleaux, l'entraîneur 22 étant axialement prisonnier entre d'une part des rouleaux s'appuyant sur une butée 24 de la tige auxiliaire 20 et d'autre part la virole 23 ;
- une roue libre à cliquets 25 agencée entre l'entraîneur 22 et la virole 23, qui, lorsque la tige auxiliaire 20 sort de la tige principale 2 et que l'entraîneur 22 tourne du fait de sa liaison hélicoïdale avec la tige principale 2, provoque la rotation de la virole 23. Par contre, lorsque la tige auxiliaire 20 rentre dans la tige principale 2, l'entraîneur 22 tourne mais n'entraîne pas la virole 23 en rotation ;
- une rondelle de frottement 26 portée par la tige auxiliaire 20 en regard d'une face libre de la virole 23 et adaptée à générer un frottement sur la virole 23 lorsque celle-ci tourne en étant appuyée contre la rondelle de frottement 26 sous l'effet de l'effort extérieur qui tire sur la tige auxiliaire 20.

### OBJET DE L'INVENTION

L'invention a pour objet de proposer un actionneur de type télescopique à tiges principale et secondaire dans lequel le contrôle et le freinage de la tige auxiliaire sont à la fois simplifiés et améliorés.

### BREVE DESCRIPTION DE L'INVENTION

A cet effet la présente invention concerne un actionneur télescopique comportant un corps dans lequel coulisse une tige principale selon un axe de coulissement entre une position de rentrée et une position de sortie, l'actionneur comportant en outre une tige auxiliaire coulissant dans la tige principale entre une position de rentrée et une position de sortie, et un palier tournant porté par la tige principale ou la tige auxiliaire et coopérant respectivement avec la tige auxiliaire ou principale selon une liaison hélicoïdale réversible, de sorte que le palier tournant tourne lorsque la tige auxiliaire coulisse dans la tige principale.

Selon l'invention l'actionneur comprend des moyens de retenue du coulissement de la tige auxiliaire comportant un organe de blocage agencé pour agir directement sur le palier tournant de sorte à commander un blocage ou une libération de la rotation du palier tournant, le blocage en rotation du palier tournant entraînant une immobilisation de la tige auxiliaire dans la tige principale.

Ainsi l'actionneur est considérablement simplifié par rapport à l'état de la technique. Cette caractéristique permet d'alléger le poids de l'actionneur et de diminuer son coût de revient puisque notamment le blocage et la libération de la tige auxiliaire par l'organe de blocage ne nécessitent pas l'emploi d'un moteur spécifique.

Selon une caractéristique avantageuse de l'invention, les moyens de retenue comportent également des moyens de freinage de type passif adaptés à freiner une rotation du palier tournant lorsque la tige auxiliaire coulisse, les moyens de retenue assurant ainsi à la fois les fonctions de contrôle et de freinage de la sortie de la tige auxiliaire.

### BREVE DESCRIPTION DES FIGURES

D'autres caractéristiques de l'invention apparaîtront clairement à la lecture de la description qui suit d'un mode de réalisation fourni à titre d'exemple non limitatif.

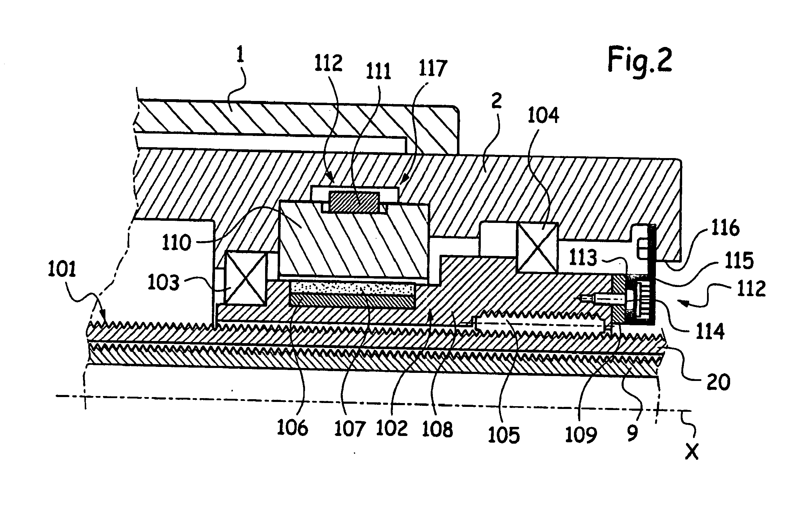

Il sera fait référence aux figures annexées parmi lesquelles, outre la figure 1 déjà détaillée, se trouve la figure 2 qui représente, selon une vue en demi-coupe schématique partielle, un exemple de réalisation de l'actionneur conforme à l'invention.

### DESCRIPTION DETAILLEE DE L'INVENTION

Pour faciliter la lecture et la compréhension de la figure 2 illustrant un mode de réalisation de l'invention, les références des éléments communs aux figures 1 et 2 sont conservées. Ainsi l'actionneur de la figure 2 dispose toujours d'un corps 1, de tiges principale 2 et auxiliaire 20, les tiges principale 2 et auxiliaire 20 étant montées à coulissement respectivement dans le corps 1 et dans la tige principale 2, selon le même axe de coulissement.

Une première différence entre l'actionneur de l'invention et l'actionneur de l'art antérieur réside dans le contrôle et le freinage de la tige auxiliaire 20, les moyens de retenue permettant ici de bloquer la tige auxiliaire 20 en position rentrée par immobilisation en rotation du palier rotatif.

Ici, la tige auxiliaire 20 comporte ici un filetage 101 sur sa surface externe. La tige principale 2 reçoit un palier 102 monté tournant sur la tige principale 2 au moyen de roulements 103,104. Le palier tournant 102 est relié à la tige auxiliaire 20 par une liaison réversible hélicoïdale au moyen de rouleaux satellites filetés 105 s'étendant entre la tige auxiliaire 20 et le palier tournant 102 de sorte que l'extension de la tige auxiliaire 20 provoque une rotation du palier tournant 102. Des moyens de retenue du coulissement 112 agissent sur le palier tournant 102 pour soit bloquer, par l'intermédiaire d'un organe de blocage 116, soit freiner, par l'intermédiaire de moyens de freinage 117, la tige auxiliaire 20.

Avantageusement l'organe de blocage 116 est constitué d'un frein. D'un frein électromagnétique avec une armature mobile 113 liée mécaniquement au corps d'écrou 114 et une armature fixe 115 portant une bobine, l'armature fixe 115 étant liée au corps 1 et immobilisée axialement et en rotation par rapport à la tige auxiliaire 20. Selon le mode de réalisation de la figure 2, lorsque le frein 116 est actif l'interaction électromagnétique entre l'armature fixe 115 et mobile 113 empêche la rotation du corps d'écrou 114.

A l'inverse lorsque le frein 116 est désactivé, le corps d'écrou 114 est libre de tourner et permet la rotation du palier 102 et la libération de la tige auxiliaire 20. L'organe de blocage 116 agit ainsi directement sur l'élément (le palier tournant) en liaison hélicoïdale avec la tige auxiliaire 20.

Différentes technologies pourront être utilisées pour réaliser l'organe de freinage 116, notamment il pourra s'agir d'un frein électromagnétique 116 à appel de courant ou encore à manque de courant, et/ou un frein mono-disque ou multidisques, ou encore un organe à blocage positif, tel qu'un embrayage à dents ou à crabot.

Les moyens de freinage 117 de la tige auxiliaire 20 sont avantageusement de type passif, et agissent sur le palier tournant 102 pour freiner sa rotation. Plus précisément, les moyens de freinage 117 comportent :
- un rotor 106 disposé sur le palier tournant 102 pour tourner avec ce dernier. Le rotor 106 est ici en fer dur et reçoit des aimants permanents 107 disposés à la périphérie du rotor 106. En variante, le rotor 106 pourra être réalisé en acier magnétique. On remarquera que le palier tournant 102 est en deux parties 108,109, la partie 108 qui porte le rotor 106 étant réalisée en matériau non magnétique, par exemple en acier inoxydable amagnétique ;
- un stator 110, porté par la tige principale 2 et bloqué en rotation par une clavette 111. Le stator est réalisé en matériau conducteur non magnétique.

Le rotor 106 et le stator 110 sont en interaction magnétique de sorte que, lorsque le palier tournant 102 et donc le rotor 106 tourne, un couple électromagnétique résistant s'établit qui tend à freiner la rotation du palier tournant 102, et donc la sortie de la tige auxiliaire 20. Ce moyen de freinage magnétique est purement passif et exerce sur la tige auxiliaire 20 un effort de freinage proportionnel à la vitesse de rotation du palier tournant 102, et donc à la vitesse de sortie de la tige auxiliaire 20.

Les moyens de freinage 117 agissent ainsi directement sur l'élément (le palier tournant) en liaison hélicoïdale avec la tige auxiliaire 20.

Bien entendu d'autres modes de réalisation à la portée de l'homme de l'art auraient également pu être envisagés sans pour autant sortir du cadre de l'invention défini par les revendications ci-après. Par exemple, selon un mode de réalisation envisageable l'organe de blocage 116 pourra assurer à la fois une fonction de blocage et une fonction de freinage de la tige auxiliaire 20. A cet effet on pourrait prévoir un organe de blocage comportant un frein à disque apte à assurer un freinage en proportionnel du palier tournant 102.

En outre, bien qu'ici le palier tournant soit le palier d'extrémité de tige principale, dont on bloque la rotation pour immobiliser la tige auxiliaire dans la tige principale, on pourra bien évidemment, et conformément à l'invention, utiliser la même stratégie pour freiner le palier tournant 22 du mode de réalisation illustré à la figure 1, qui n'est cette fois plus le palier d'extrémité de tige principale, mais le palier d'extrémité de tige auxiliaire, et qui se trouve en relation hélicoïdale avec la tige principale.

## Revendications

1. Actionneur télescopique comportant un corps (1) dans lequel coulisse une tige principale (2) selon un axe de coulissement entre une position de rentrée et une position de sortie, l'actionneur comportant en outre une tige auxiliaire (20) coulissant dans la tige principale (2) entre une position de rentrée et une position de sortie, et un palier tournant (102) porté par la tige principale (2) ou la tige auxiliaire (20) et coopérant respectivement avec la tige auxiliaire (20) ou principale (2) selon une liaison hélicoïdale réversible de sorte qu'un coulissement de la tige auxiliaire provoque une rotation du palier tournant, de sorte que le blocage en rotation du palier tournant (102) entraîne une immobilisation de la tige auxiliaire (20) dans la tige principale (2), **caractérisé en ce que** l'actionneur comprend des moyens de retenue (112) du coulissement de la tige auxiliaire (20) comportant un organe de blocage (116) agencé pour agir directement sur le palier tournant de sorte à commander un blocage ou une libération de la rotation du palier tournant (102).

2. Actionneur selon la revendication 1 dans lequel les moyens de retenue (112) comportent en outre des moyens de freinage (117) permettant de freiner la rotation du palier tournant (102) lorsque la tige auxiliaire (20) coulisse dans le sens de son extension.

3. Actionneur selon la revendication 1 dans lequel la tige principale (2) porte à son extrémité le palier tournant (102), lequel coopère avec la tige auxiliaire (20) selon une liaison hélicoïdale réversible.

4. Actionneur selon revendication 1 dans lequel l'organe de blocage (116) comprend un frein de type électromagnétique.

5. Actionneur selon la revendication 4 dans lequel le frein électromagnétique (116) bloque en mode actif le palier tournant (102) empêchant la sortie de la tige auxiliaire (20).

6. Actionneur selon la revendication 4 dans lequel le frein électromagnétique (116) est du type mono-disque.

## Claims

1. A telescopic actuator comprising a cylinder (1) receiving a main rod (2) to slide along a sliding axis between a retracted position and an extended position, the actuator further including an auxiliary rod (20) slidable in the main rod (2) between a retracted position and an extended position, and a rotary bearing (102) carried by the main rod (2) or the auxiliary rod (20) and co-operating respectively with the auxiliary rod (20) or the main rod (2) via a reversible helical connection such that sliding of the auxiliary rod causes the rotary bearing to rotate, the actuator being **characterized in that** it includes retaining means (112) for retaining the sliding of the auxiliary rod (20) and comprising a blocking member (116) arranged to act directly on the rotary bearing so as to cause rotation of the rotary bearing (102) to be blocked or to be released, so that blocking rotation of the rotary bearing (102) prevents the auxiliary rod (20) from moving in the main rod (2).

2. An actuator according to claim 1, wherein the retaining means (112) further comprise brake means (117) enabling rotation of the rotary bearing (102) to be braked while the auxiliary rod (20) is sliding in the extension direction.

3. An actuator according to claim 1, wherein the main rod (2) carries the rotary bearing (102) at its end, which bearing co-operates with the auxiliary rod (20) via a reversible helical connection.

4. An actuator according to claim 1, wherein the blocking member (116) comprises a brake of electromagnetic type.

5. An actuator according to claim 4, wherein the electromagnetic brake (116) in its active mode blocks the rotary bearing (102), preventing the auxiliary rod (20) from being extended.

6. An actuator according to claim 4, wherein the electromagnetic brake (116) is of the single-disk type.

## Patentansprüche

1. Teleskopischer Stellantrieb umfassend ein Gehäuse (1), in dem entlang einer Verschiebungsachse eine Haupttriebstange (2) zwischen einer eingefahrenen Position und einer ausgefahrenen Position gleitet, wobei der Stellantrieb außerdem eine Hilfstriebstange (20) umfasst, die in der Haupttriebstange (2) zwischen einer eingefahrenen Position und ausgefahrenen Position gleitet, sowie ein drehbares Lager (102), das von der Haupttriebstange (2) oder der Hilfstriebstange (20) getragen wird und das jeweils mit der Hilfstriebstange (20) oder der Haupttriebstange (2) über eine reversible Schraubverbindung zusammenwirkt, so dass eine Verschiebung der Hilfstriebstange eine Rotation des drehbaren Lagers bewirkt und dass die Rotationssperre des drehbaren Lagers (102) eine Blockierung der Hilfstriebstange (20) in der Haupttriebstange (2) herbeiführt, **dadurch gekennzeichnet, dass** der Stellantrieb Rückhaltemittel (112) zum Verhindern der Verschiebung der Hilfstriebstange (20) mit einer Sperrvorrichtung (116) aufweist, die so ausgebildet ist, dass sie direkt auf das drehbare Lager einwirkt, um eine Sperre oder eine Freigabe der Rotation des drehbaren Lagers (102) zu steuern.

2. Stellantrieb gemäß Anspruch 1, wobei die Rückhaltemittel (112) darüber hinaus Bremsmittel (117) umfassen, wodurch die Rotation des drehbaren Lagers (102) gebremst werden kann, wenn die Hilfstriebstange (20) in Ausfahrrichtung gleitet.

3. Stellantrieb gemäß Anspruch 1, wobei sich am Ende der Haupttriebstange (2) das drehbare Lager (102) befindet, welches mit der Hilfstriebstange (20) über eine reversible Schraubverbindung zusammenwirkt.

4. Stellantrieb gemäß Anspruch 1, wobei die Sperrvorrichtung (116) eine elektromagnetische Bremse enthält.

5. Stellantrieb gemäß Anspruch 4, wobei die elektromagnetische Bremse (116) im aktiven Zustand das drehbare Lager (102) blockiert und somit das Ausfahren der Hilfstriebstange (20) verhindert.

6. Stellantrieb gemäß Anspruch 4, wobei die elektromagnetische Bremse (116) eine Einscheibenbremse ist.
